# EUROPÄISCHE PATENTANMELDUNG

(11) **EP 1 130 326 A2**
(43) Veröffentlichungstag der Anmeldung: **05.09.2001**
(21) Anmeldenummer: 01103950.0
(22) Anmeldetag: 19.02.2001
(51) Int. Cl.: F24D 3/16

(54) **Strahlflächenaufbau**

(30) Priorität: 17.02.2000 DE 20002868 U
(71) Anmelder: Frenger Systemen BV Heiz- und Kühltechnik GmbH, 64823 Gross-Umstadt (DE)
(72) Erfinder: Menge Klaus,, 64823 Gross-Umslacht (DE)
(74) Vertreter: KEIL & SCHAAFHAUSEN

(57) **Zusammenfassung**

Die Erfindung bezieht sich auf einen Strahlflächenaufbau, insbesondere Deckenstrahlflächenaufbau, mit einer Aufhängung und Strahlplatten aus Blech, die mit einem z. B. aufgekanteten Rand an zumindest einem von im Abstand voneinander angeordneten Rohren eines mit einem Heiz- bzw. Kühlmedium zu beaufschlagenden Rohrregisters zur Wärmeübertragung anliegen, und ist, wobei an dem jeweiligen Rohr zumindest ein Gewindebolzen angebracht ist, über den zumindest ein Befestigungselement zur Festlegung der Strahlplatte(n) an dem jeweiligen Rohr gegen den an dem Rohr anliegenden Rand anpressbar ist.

## Beschreibung

Die Erfindung betrifft einen Strahlflächenaufbau, insbesondere einen Deckenstrahlflächenaufbau, der zum Heizen oder Kühlen von Räumen oder Gebäuden geeignet ist. Ein derartiger Strahlflächenaufbau weist eine Aufhängung und Strahlplatten aus Blech auf, die mit einer Randaufkantung an zumindest einem von im Abstand voneinander angeordneten Heiz- oder Kühlrohren eines Heiz- bzw. Kühlrohrregisters zur Wärmeübertragung anliegen.

Aus der DE-PS 972 683 ist eine Strahlungsdecke für Räume bekannt, die eine Anzahl von Röhren aufweist, durch die im Betrieb ein Heizmedium strömt. Einzelne Strahlungsplatten sind zwischen den Röhren angeordnet und mit diesen durch eine Randumkantung anliegend verbunden. Die Randumkantungen sollen über zwei Klammem, die im wesentlichen eine der Randumkantung ähnliche Kontur aufweisen, an den Röhren gehalten werden, indem die Klammem über Schrauben zusammengehalten werden. Die Schrauben erstrecken sich quer zu der Durchflussrichtung der Röhren unterhalb von diesen und durchdringen sowohl die Klammem als auch die Randumkantungen der Strahlplatten. Dadurch ist der Wärmeübergang unbefriedigend. Durch das Anbringen der Schrauben in einem Bereich zwischen den Röhren und den Strahliplatten muss die von den Röhren abgegebene Wärme über einen vergleichsweise langen und durch die Schrauben unterbrochenen Stegbereich geleitet werden, bis sie die zum Abstrahlen der Wärme vorgesehenen Strahlplatten erreicht.

In der DE 198 30 245 A1 ist eine Strahlheizflächenkonstruktion offenbart, die eine Aufhängung und Strahlplatten aus verhältnismäßig dünnen Stahl- oder Aluminiumblech aufweist, welche unter entsprechender Profilierung wenigstens einer Randaufkantung an wenigstens einem von im Abstand voneinander angeordneten Heizrohren eines Heizrohrregisters zur Wärmeübertragung anliegen. Die Strahlplatten sind von der Rückseite des Heizrohrregisters her, also im Falle einer Strahlheizdecke von der Oberseite her, unter Freihaltung eines vorderseitigen Abstrahlbereiches des jeweiligen Heizrohrs an bzw. auf den Heizrohren montierbar. Die Randaufkantungen der Strahlplatten sind dabei mittels Klemmfedem auf den Heizrohren gehalten. Die Klemmfedem bestehen aus einem federelastischen Flachmaterial und weisen Bügelform mit nach innen abgebogenen Klemmlaschen auf.

Der Erfindung liegt das technische Problem zugrunde, bei gutem Wärmeübergang und damit gutem Wirkungsgrad einen Strahlflächenaufbau bereitzustellen, der kostengünstig und einfach herstellbar ist.

Dieses technische Problem wird erfindungsgemäß mit einem Strahlflächenaufbau der eingangs genannten Art z.B. dadurch gelöst, dass an dem jeweiligen Rohr zumindest ein Gewindebolzen angebracht ist, über den zumindest ein Befestigungselement zur Festlegung der Strahlplatte(n) an dem jeweiligen Rohr gegen den an dem Rohr anliegenden Rand anpressbar ist.

Der vorliegende Erfindungsgedanke besteht also im Wesentlichen darin, an den Rohren einen Gewindebolzen vorzusehen, über den ein Befestigungselement die Ränder der Strahlplatten gegen die Rohre angepressst wird, an denen sie anliegen. Auf diese Weise wird vorteilhaft eine besonders sichere großflächige Anlage der Ränder der Strahlplatten an den Rohren erreicht, so dass ein guter Wärmeübergang zwischen den Strahplatten und Rohren stattfinden kann. Gleichzeitig ist es zeitsparend, die ggf. aufgekanteten Ränder der Strahlplatten über ein Befestigungselement an die Rohre anzupressen, indem lediglich eine Gewindemutter auf die Gewindebolzen aufgeschraubt wird. Diese Tätigkeit kann auch von ungelernten Hilfskräften schnell und einfach durchgeführt werden, was eine kostengünstige Montage des Strahlflächenaufbaus ermöglicht.

Grundsätzlich kann der erfindungsgemäße Strahlflächenaufbau sowohl zum Heizen, z.B. als Heizdecke, als auch zum Kühlen, z.B. als Kühldecke, von Räumen oder Gebäuden eingesetzt werden.

Der Gewindebolzen ist vorzugsweise auf dem Rohr nach oben ragend festgeschweißt. Um ein dichtes Anliegen der Ränder
der Strahlplatten an dem Rohr zu ermöglichen, wird bevorzugt der Gewindebolzen in dem Anschweißbereich mit einem reduzierten Durchmesser ausgestattet. Der Gewindebolzen kann zu diesem Zweck im Anschweißbereich ausgefräst oder abgekantet sein. So kann eine Schweißnaht zur Verbindung des Gewindebolzens mit dem Rohr in die durch die Durchmesserreduzierung entstehende Nut eingebracht werden, so dass die Ränder der Strahlplatten bis dicht an den Nenndurchmesser des Gewindebolzens an dem Rohr reichen und entsprechend großflächig anliegen können. Auf diese Weise erfolgt die Wärmeleitung aus den Rohren in die Strahlplatten oder umgekehrt besonders gut. Altemativ kann der Gewindebolzen auch mit einer anderen Befestigungstechnik, bspw. durch Kleben, Löten oder Verschrauben, mit dem Rohr verbunden werden.

Um einen noch besseren Wärmeübergang zu sichern, kann das z.B. U-profilförmige Befestigungselement mit zumindest einer Durchgangsbohrung für den Gewindebolzen ausgebildet und mittels einer Mutter gegen den Rändern und dieser damit gegen das jeweilige Rohr festspannbar sein.

Nach einer bevorzugten Ausführungsform der Erfindung werden die Strahlplatten unter Freihaltung eines vorderseitigen, also von dem Gewindebolzen wegweisenden Abstrahlbereiches von der Rückseite des Heizrohrregisters her, auf der die Gewindebolzen angebracht sind, an bzw. auf den Rohren montiert. Die Rohre, zwischen denen sich die Strahlplatten befinden, können auf diese Weise ihre Energie ungehindert und direkt in den umgebenden Raum abstrahlen oder von diesem aufnehmen, wodurch eine besonders gute Energieabnahme bzw. Energieaufnahme erfolgen kann. Gleichzeitig erfolgt jedoch eine Wärmeübertragung zwischen den Strahlplatten und dem sie umgebenden Raum, wobei durch die Ränder der Strahlplatten ebenfalls ein guter Wärmeübergang zwischen den Strahlplatten und den Rohren und umgekehrt gewährleistet ist. Die Heiz- bzw. Kühlleistung erhöht sich auf diese Weise bei gleichbleibendem Flächenbedarf und damit Montageaufwand des Strahlflächenaufbaus.

Es hat sich als besonders günstig herausgestellt, wenn der freigehaltene vorderseitige Abstrahlbereich der Rohre einen Umfangsbereich zwischen 120° und 180°, wenn es sich um Rundrohre als Rohre handelt, oder zwischen 90° und 270°, wenn es sich um Vierkantrohre als Rohre handelt, einnimmt. Der Rand der Strahlplatten weist dabei bei Rundrohren einen angerollten Radius auf, der im wesentlichen dem Außenradius der Rohre entspricht. Im Falle der Verwendung von Vierkantrohren als Rohre können vollständig flache Strahlplatten verwendet werden, welche mit ihren ebenen Rändern auf der Oberseite der Vierkantrohre aufliegen. Es kann jedoch auch eine mehr oder weniger hohe Abwinklung des Randes vorgesehen sein, die im Wesentlichen der Abwinklung der Rohre entspricht.

Ein erfindungsgemäßer Strahlflächenaufbau besteht vorzugsweise aus einer oder mehreren als Mittelplatten ausgebildeten Strahlplatten sowie in jeder Plattenreihe zwei als Seitenplatten ausgebildeten Strahlplatten. Die Seitenplatten liegen dabei lediglich mit ihrem inneren Rand an einem Rohr an, während sie sich auf der dem Rohr abgewandten Seite auf einem Querträger zur Aufhängung abstützen. Die Mittelplatten sind dahingegen von der Rückseite des Rohrregisters her zwischen je zwei Rohre drückbar und einrastbar. Eine Aufhängung des Strahlflächenaufbaus kann dabei mit einem gleichzeitig als Niederhalter der Strahlplatten auf dem Rohrregister dienenden Querträger ausgebildet sein.

Im folgenden wird eine Ausführungsform der vorliegenden Erfindung unter Bezugnahme auf die beigefügten Zeichnung näher erläutert, in denen:
- Fig. 1: eine schematische Querschnittsansicht eines erfidnungsgemäßen Strahlflächenaufbaus und
- Fig. 2: eine vergrößerte Darstellung des Details II aus Fig. 1
ist.

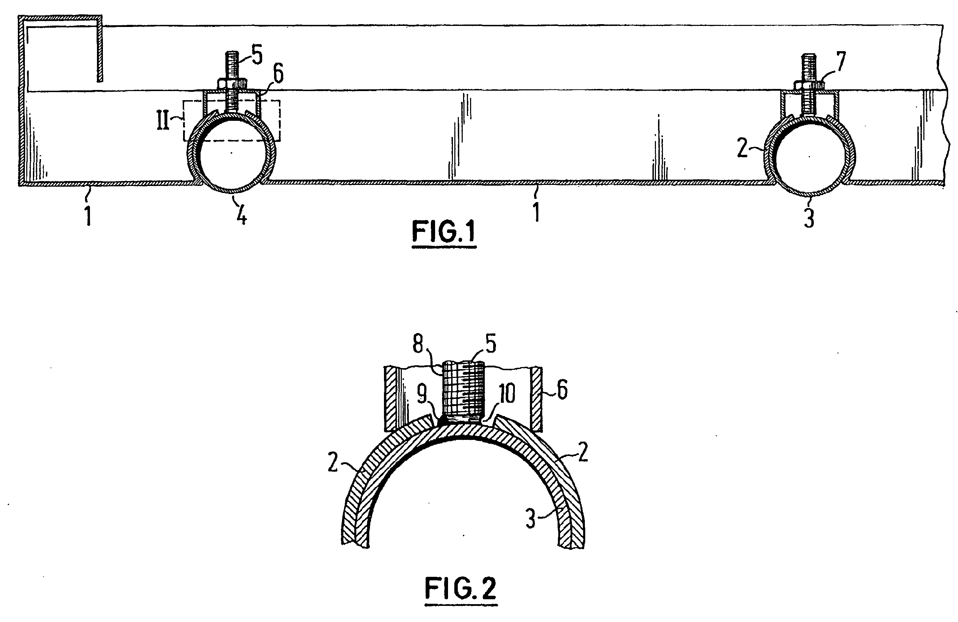

In Fig. 1 ist ein Ausführungsbeispiel eines erfindungsgemäßen Strahlflächenaufbaus mit zwei Strahlplatten 1 und ein Register bildenden Rohren 3 dargestellt. Die in Fig. 1 linke Strahlplatte 1 ist als eine Seitenplatte mit einem rechten aufgekanteten Rand 2 ausgebildet, während die in Fig. 1 mittlere Strahlplatte 1 als Mittelplatte mit zwei aufgekanteten Rändern 2 ausgebildet ist. Die Ränder 2 liegen vollflächig an den Rohren 3 an. Durch die Strahlplatten 1 wird ein Rohrsegment der Rohre 3 nicht abgedeckt, so dass ein freigehaltener Abstrahlbereich 4 gebildet ist, der in direkten Kontakt mit der Umgebung steht.

Wie insbesondere in der vergrößerten Darstellung von Fig. 2 gezeigt, ist auf der dem Abstrahlbereich 4 abgewandten Seite des Rohres 3 ein Gewindebolzen 5 angebracht. Der Gewindebolzen 5 weist an seinem an das Rohr 3 angrenzenden Ende einen durch eine Ausnehmung 10 verringerten Durchmesser auf. In der gezeigten Ausführungsform ist der Gewindebolzen 5 über eine Schweißnaht 9 mit dem Rohr 3 verbunden, welche in die hohlkehlartige Ausnehmung 10 eingebracht ist. Die Ränder 2 der Strahlplatten 1 liegen so an dem Rohr 3 bis dicht an den Gewindebolzen 5 heran an.

Ein Befestigungselement 6, das als eine U-förmige Schiene ausgebildet ist, ist so auf den Gewindebolzen 5 aufgeschoben, dass dessen Schenkel jeweils auf einem Rand 2 aufliegen, während der die Schenkel verbindende Steg des U-förmigen Befestigungselementes 6 eine Durchgangsöffnung aufweist, durch die sich der Gewindebolzen 5 erstreckt. Mittels einer auf das Außengewinde 8 des Gewindebolzen 5 aufschraubbaren Mutter 7 ist das Befestigungselement 6 gegen die Ränder 2 spannbar, so dass diese fest an das Rohr 3 angedrückt werden.

Der gesamte Strahlflächenaufbau kann über eine in den Figuren nicht gezeigte Aufhängung bspw. an einer Decke eines Büroraumes etc. aufgehängt werden, um den Raum in Abhängigkeit der Temperatur des durch die Rohre fließenden Heiz- oder Kühlmediums zu heizen oder zu kühlen. Aufgrund des guten Wärmeübergangs werden bevorzugt ggf. beschichtete Strahlplatten 1 aus einem Aluminium- oder Stahlblech verwendet.

### Bezugszeichenliste:

- 1: Strahlplatten
- 2: Rand
- 3: Heizrohre
- 4: Abstrahlbereiche
- 5: Gewindebolzen
- 6: Befestigungselement
- 7: Mutter
- 8: Gewinde
- 9: Schweißnaht
- 10: Ausnehmung

## Patentansprüche

1. Strahlflächenaufbau, insbesondere Deckenstrahlflächenaufbau, mit einer Aufhängung und Strahlplatten (1) aus Blech, die mit einem z. B. aufgekanteten Rand (2) an zumindest einem von im Abstand voneinander angeordneten Rohren (3) eines mit einem Heiz- bzw. Kühlmedium zu beaufschlagenden Rohrregisters zur Wärmeübertragung anliegen, **dadurch gekennzeichnet,** dass an dem jeweiligen Rohr (3) zumindest ein Gewindebolzen (5) angebracht ist, über den zumindest ein Befestigungselement (6) zur Festlegung der Strahlplatte(n) (1) an dem jeweiligen Rohr (3) gegen den an dem Rohr (3) anliegenden Rand (2) anpressbar ist.

2. Strahlflächenaufbau nach Anspruch 1, **dadurch gekennzeichnet,** dass der Gewindebolzen (5) auf dem Rohr (3) angeschweißt ist.

3. Strahlflächenaufbau nach Anspruch 2, **dadurch gekennzeichnet,** dass der Gewindebolzen (5) im Anschweißbereich (10) einen reduzierten Durchmesser aufweist.

4. Strahlflächenaufbau nach Anspruch 2, **dadurch gekennzeichnet,** dass der Gewindebolzen (5) im Anschweißbereich (10) ausgefräst oder abgekantet ist.

5. Strahlflächenaufbau nach einem der Ansprüche 1 bis 4, **dadurch gekennzeichnet,** dass das Befestigungselement (6) z.B. U-profilförmig mit zumindest einer Durchgangsbohrung für den Gewindebolzen (5) ausgebildet und mittels einer Mutter (7) gegen die Ränder bzw. den Rand (2) und diese(r) damit gegen das jeweilige Rohr (3) festspannbar sind (ist).

6. Strahlflächenaufbau nach einem der vorangegangenen Ansprüche, **dadurch gekennzeichnet**, dass die Strahlplatten (1) von der Rückseite des Rohrregisters her, auf der die Gewindebolzen (5) angebracht sind, unter Freihaltung eines vorderseitigen Abstrahlbereiches (4) des jeweiligen Rohres (3) an bzw. auf den Rohren (3) montierbar sind.

7. Strahlflächenaufbau nach Anspruch 6, **dadurch gekennzeichnet,** dass die Rohre (3) Rund- oder Vierkantrohre sind und der freigehaltene vorderseitige Abstrahlbereich (4) einen Umfangsbereich der Rohre (3) zwischen 120° und 180°, wenn es sich um Rundrohre handelt, und zwischen 90° und 270°, wenn es sich um Vierkantrohre handelt, einnimmt.

8. Strahlflächenaufbau nach einem der Ansprüche 6 oder 7, **dadurch gekennzeichnet,** dass bei Rundrohren als Rohre (3) der Rand (2) einen angerollten Radius aufweisen, welcher dem Außenradius der Rohre (3) im wesentlichen entspricht, oder bei Vierkantrohren als Rohr (3) die Ränder (2) entweder eben sind und auf der Oberseite der Rohre (3) flach aufliegen oder eine Abwicklung aufweisen, welche der Abwicklung der Rohre (3) im wesentlichen entspricht.

9. Strahlflächenaufbau nach einem der vorangegangenen Ansprüche, **dadurch gekennzeichnet,** dass die als Mittelplatten ausgebildeten Strahlplatten (1) von der Rückseite des Rohrregisters her zwischen je zwei Rohre (3) drückbar und einrastbar sind.

10. Strahlflächenaufbau nach einem der vorangegangenen Ansprüche, **dadurch gekennzeichnet,** dass die als Seitenplatten ausgebildeten Strahlplatten (1) einerseits mit ihrem Rand (2) an einem Rohr (3) anliegen und andererseits auf einem Querträger der Aufhängung abgestützt sind.

11. Strahlflächenaufbau nach einem der vorangegangenen Ansprüche, **dadurch gekennzeichnet,** dass die Aufhängung einen Querträger aufweist, welcher als Niederhalter der Stmhlplatten (1) auf dem Rohrregister dient.
